# EUROPEAN PATENT APPLICATION

(11) **EP 4 592 421 A1**
(43) Date of publication of application: **30.07.2025**
(21) Application number: 24180346.9
(22) Date of filing: 05.06.2024
(51) Int. Cl.: C23C 4/02, C23C 4/08, C23C 4/131, C23C 4/18, C23C 24/04, C23C 24/08, C23C 28/00, A47J 27/00, A47J 36/00, B24C 1/00

(54) **COLD SPRAY POT WITH BOTTOM OIL ACCUMULATING FUNCTION AND MANUFACTURING METHOD THEREFOR**

(30) Priority: 25.01.2024 CN 202410103366
(71) Applicant: Ningbo Golden Elephant Kitchenware Co., Ltd, Ningbo Zhejiang (CN)
(72) Inventor: Wang, Cheng, Ningbo Zhejiang (CN)
(74) Representative: karo IP

(57) **Abstract**

The present invention relates to a manufacturing method for a cold spray pot with a bottom oil accumulating function, comprising the following steps: S1: forming an aluminum alloy sheet into a shape of a pot billet, an annular lug boss is protruded from the outer bottom, and a cambered surface protruded outwards is formed in the central area of the bottom; S2: performing oil removal and internal sandblasting operation so that the surface roughness reaches Ra 2.8 to Ra 4.5; S3: spraying non-stick paint onto the inner surface of the pot billet to obtain a non-stick coating; S4: cold spraying magnetic conductive powder onto the outer bottom of the pot billet to obtain a magnetic conductive coating; and then arc spraying metallic aluminum onto the magnetic conductive coating to obtain an anti-rust coating; S5: polishing the outer wall of the pot billet; and S6: spraying high-temperature resistant non-stick paint onto the overall outer surface of the pot billet. The manufacturing method for a pot of the present invention not only can obtain a pot with a bottom oil accumulating function, but also can make the pot meet the requirements of long-term performance of high efficiency electromagnetic heating and heat conduction at high temperature.

## Description

### Technical Field

The present invention relates to the technical field of pots, and particularly relates to a cold spray pot with a bottom oil accumulating function and a manufacturing method therefor.

### Background

Most of the existing stoves such as household induction cookers, light wave stoves and electric ceramic stoves adopt panels of plane design, and the pots used have bottoms designed to be slightly protruded inwards to avoid uneven placement or rotation of the pots on the panels of the stoves. Meanwhile, a magnetic conductive plate is usually arranged at the outer bottom of the pot, and the energy is transferred to the pot by responding to the high-frequency magnetic field of the induction cooker and other stoves, so as to achieve the purpose of heating the pot.

The traditional magnetic conductive plate is integrally combined at the outer bottom of the aluminum substrate. Since the magnetic conductive plate and the aluminum substrate have different coefficients of thermal expansion, the bottom of the pot will protrude inwards to different degrees during the heating process, and protrude more inwards with the increase of temperature, and edible oil poured into the pot will flow to the periphery of the bottom of the pot during the cooking process so that the middle position of the bottom of the pot is short of edible oil, affecting the cooking effect of food. In addition, it is easy to cause local cracks and other defects between coatings after long-term use due to different expansion coefficients of the magnetic conductive plate and the aluminum substrate.

In view of this, it is urgent to develop a pot with a bottom oil accumulating function which can achieve long-term use.

### Summary

In view of the above-mentioned defects in the prior art, the present invention provides a manufacturing method for a cold spray pot with a bottom oil accumulating function in one aspect to solve the problem that a pot that has a bottom oil accumulating function and can carry out long-term high efficiency electromagnetic heating and heat conduction at high temperature cannot be manufactured by the existing manufacturing methods for a pot.

To achieve the above purpose, the present invention adopts the following technical solution:

A manufacturing method for a cold spray pot with a bottom oil accumulating function, comprising the following steps:

S1 pot body forming operation: forming an aluminum alloy sheet into a shape of a pot billet by a large-tonnage press, wherein an annular lug boss is protruded outwards from the peripheral edge of the outer bottom of the pot billet, and a cambered surface protruded outwards is formed in the central area of the bottom of the pot billet;

S2 pretreatment operation: performing oil removal and internal sandblasting operation on the pot billet obtained in step S1 so that the inner surface roughness of the pot billet reaches Ra 2.8 to Ra 4.5;

S3 internal spraying operation: using internal spraying equipment to spray non-stick paint onto the inner surface of the pot billet obtained in step S2 to obtain a non-stick coating; the internal spraying equipment and non-stick paint of the present application are conventional technical means in the art, which will not be repeated here. For example, the non-stick paint of the present application can be polytetrafluoroethylene paint, and the prior art of any one of non-stick coating materials disclosed in the following patent documents can be cited, for example, CN202110239015.3, CN201910589192.7, CN202110239029.5 and CN202210256925.7;

S4 outer bottom spraying operation: using cold gas spraying equipment to cold spray magnetic conductive powder onto the outer bottom of the pot billet obtained in step S3 to obtain a magnetic conductive coating; and then using arc spraying equipment to arc spray metallic aluminum onto the magnetic conductive coating to obtain an anti-rust coating;

S5 external polishing operation: polishing the outer wall of the pot billet obtained in step S4 on a polisher; so as to remove scratches and dents from the surface of the outer wall of the pot billet;

S6 external spraying operation: using external spraying equipment to apply a high-temperature resistant protective outer coating onto the overall outer surface of the pot billet obtained in step S5 to finally obtain the cold spray pot with a bottom oil accumulating function.

As a preferred technical solution, the height difference H between the central point position of the outermost surface of the cambered surface and the peripheral edge position of the annular lug boss is 1.0-1.5 mm.

As a preferred technical solution, the oil removal operation comprises the following steps: using sodium hydroxide solution to remove grease and oxides from the surface of the pot billet first, and then flushing with water; and conducting neutralization with dilute nitric acid at room temperature, finally flushing with water, and blow-drying to obtain a clean pot billet.

As a preferred technical solution, the internal sandblasting operation comprises the following steps: using a sandblasting machine to spray 60-mesh or 80-mesh brown corundum sand uniformly onto the inner surface of the pot billet at an air pressure of 0.6-0.7 MPa, so as to achieve the roughness required for internal spraying.

As a preferred technical solution, in step S4, the cold spraying operation specifically comprises the following steps: on cold gas spraying equipment, with 800-900°C inert compressed gas as an accelerating medium, accelerating the metal particles of the magnetic conductive powder (magnetic conductive iron powder or 430 magnetic conductive powder) to a critical speed to drive the metal particles to collide with the surface of the outer bottom of the pot billet at a supersonic speed of 800-1000 m/s in a solid state so that the particles undergo strong plastic deformation and deposition to form a magnetic conductive coating. The thickness of the magnetic conductive coating is controlled between 150 and 200 um. During the whole cold spraying process, the metal particles are not melted due to low temperature, and the accelerating medium is inert gas (800-900°C nitrogen), so the metal particles are not melted or oxidized, and the original physical and chemical properties of the material are retained. For the cold spraying operation of the present invention, since the magnetic conductive iron powder or 430 magnetic conductive powder (with a particle size of 15-45 um) is deposited at the outer bottom of the pot billet at a very high speed and superimposed on each other in a particle state, not as a whole as the traditional cold and hot double-bottom plates, the amount of deformation is small during heating. Moreover, since the magnetic conductive metal particles are uniformly deposited at the outer bottom of the pot billet, and the particles are not partitioned by holes like traditional cold double-bottom plates, the magnetic conductive power is close to the magnetic conductive power of hot double-bottom products when used on the induction cooker and other stoves and much larger than the magnetic conductive power of traditional cold double-bottom products.

As a preferred technical solution, in step S4, the arc spraying operation specifically comprises the following steps: melting aluminum wires by arc spraying equipment using arcs generated between two continuously fed aluminum wires as a heat source, atomizing the molten metallic aluminum wires with 0.6-0.7 MPa compressed air, accelerating the atomized metallic aluminum droplets, and spraying the droplets onto the outer bottom of the pot billet at a speed of 120-180 m/s to form an anti-rust aluminum coating. The thickness of the anti-rust coating is controlled between 5 and 10 um. Since the magnetic conductive iron powder or 430 magnetic conductive powder is prone to rust when coming into contact with air, water or salt, the present application avoids rust and other problems of the magnetic conductive iron powder or 430 magnetic conductive powder by applying a magnetic conductive coating onto the outer bottom of the pot billet by cold gas spraying and then applying an anti-rust aluminum coating by arc spraying.

As a preferred technical solution, before the cold spraying operation in step S4, the surface of the outer bottom of the pot billet is treated by ion beams (operating at a voltage of 2500 V), and the gas used in the ion beam treatment is a mixture of 15 sccm argon and 5 sccm sulfur dioxide to form a sulfur interface material layer with a thickness of no more than 5 atomic layers on the surface of the outer bottom of the pot billet. The present application uses high energy ion beams to break and recombine chemical bonds so that sulfur atoms are bound with metallic aluminum atoms of the substrate of the pot billet to form stable chemical bonds after nucleation reaction to adhere to the surface of the pot billet. Further, during the subsequent cold spraying operation, the metal particles of the magnetic conductive powder react at high temperature with the sulfur interface material layer with a thickness of no more than 5 atomic layers under the action of 800-900°C inert compressed gas to form strongly chemically bonded iron sulfide, thereby improving the binding force between the cold spray magnetic conductive coating and the substrate of the pot billet, avoiding the defects such as cracks or fine lines after long-term use due to different expansion coefficients of the functional coating material and the aluminum alloy pot billet, further extending the service life of the cold spray pot of the present application, and improving the cooling effect.

As a preferred technical solution, after the cold spraying operation in step S4, the surface of the magnetic conductive coating is treated by ion beams (operating at a voltage of 2500 V), and the gas used in the ion beam treatment is a mixture of 20 sccm argon and 10 sccm sulfur dioxide to form a sulfur interface material layer with a thickness of 5-10 atomic layers on the surface of the magnetic conductive coating of the pot billet. Similarly, the present application uses high energy ion beams to break and recombine chemical bonds so that sulfur atoms react with iron atoms in the metal particles of the magnetic conductive powder to form stable chemical bonds to adhere to the surface of the magnetic conductive coating. Further, during the subsequent arc spraying operation, the atomized high-temperature metallic aluminum droplets react with the sulfur interface material layer with a thickness of 5-10 atomic layers on the magnetic conductive coating to form strongly chemically bonded aluminum sulfide, thereby improving the binding force between the aluminum protected anti-rust coating and the magnetic conductive coating, avoiding the defects such as cracks or fine lines after long-term use due to different expansion coefficients of functional coatings of different materials, further extending the service life of the cold spray pot of the present application, and improving the cooling effect.

As a preferred technical solution, in step S6, the protective outer coating can be formed from at least one of high-temperature paint, ceramic paint and non-stick paint. For example, the prior art of any one of coating materials disclosed in the following patent documents can be cited, for example, CN201910589481.7, CN201910589193.1, CN202110239015.3, CN201910589192.7, CN202110239029.5 and CN202210256925.7.

The present invention provides a cold spray pot with a bottom oil accumulating function in another aspect, and the pot is manufactured by the above manufacturing method for a cold spray pot with a bottom oil accumulating function.

Compared with the prior art, the present invention has the beneficial effects that:

In the manufacturing method for a cold spray pot with a bottom oil accumulating function of the present application, the pot billet is formed into an annular lug boss and a cambered surface, and after pretreatment and internal spraying operation, the bottom of the pot is ensured to have a good oil accumulating function, so as to improve the cooking effect of the pot. Further, a pot that can carry out long-term high efficiency electromagnetic heating and heat conduction at high temperature is obtained through cold spraying and arc spraying operation in combination with the effect of interface materials with different atomic layers, thus further ensuring long service life and good cooking effect of the pot.

### Description of Drawings

Fig. 1 is a structural schematic diagram of a cold spray pot with a bottom oil accumulating function of the present invention.
Fig. 2 is a local enlarged view of Position A in Fig. 1.
Fig. 3 is a local enlarged view of Position B in Fig. 2.

In the figures, 1. pot billet, 11. annular lug boss, 12. cambered surface, 101. non-stick coating, 102. magnetic conductive coating, 103. anti-rust coating, and 104. protective outer coating.

### Detailed Description

The following description is used to disclose the present invention so as to enable those skilled in the art to realize the present invention. The preferred embodiment in the following description is only an example, and those skilled in the art can think of other obvious variations.

### Embodiment

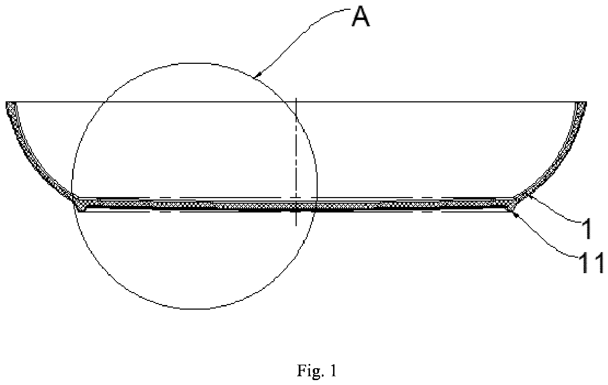

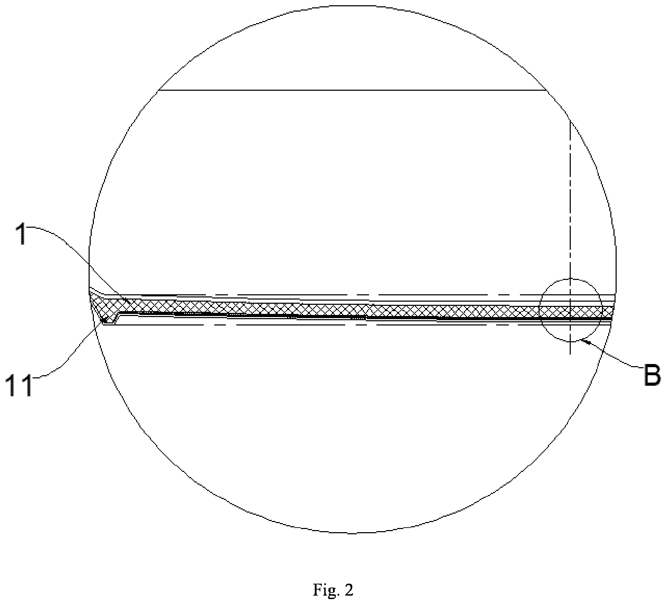

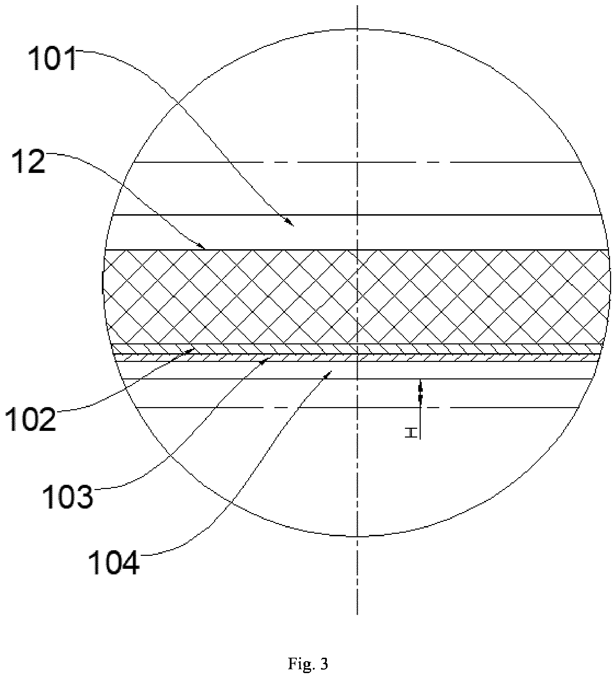

As shown in Fig. 1 to Fig. 3, the manufacturing method for a cold spray pot with a bottom oil accumulating function of the present embodiment comprises the following steps:

S1 pot body forming operation: forming an aluminum alloy sheet into a shape of a pot billet 1 by a large-tonnage press, wherein an annular lug boss 11 is protruded outwards from the peripheral edge of the outer bottom of the pot billet 1, and a cambered surface 12 protruded outwards is formed in the central area of the bottom of the pot billet 1; and the height difference H between the central point position of the outermost surface of the cambered surface 12 and the peripheral edge position of the annular lug boss 11 is 1.0-1.5 mm.

S2 pretreatment operation: performing oil removal and internal sandblasting operation on the pot billet 1 obtained in step S1, wherein the oil removal operation comprises the following steps: using sodium hydroxide solution to remove grease and oxides from the surface of the pot billet 1 first, and then flushing with water; and conducting neutralization with dilute nitric acid at room temperature, finally flushing with water, and blow-drying to obtain a clean pot billet 1; and the internal sandblasting operation comprises the following steps: using a sandblasting machine to spray 60-mesh brown corundum sand uniformly onto the inner surface of the pot billet 1 at an air pressure of 0.6 MPa so that the inner surface roughness of the pot billet 1 reaches Ra 3.6±4, so as to achieve the roughness required for internal spraying.

S3 internal spraying operation: using internal spraying equipment to spray non-stick paint onto the inner surface of the pot billet 1 obtained in step S2 to obtain a non-stick coating 101,wherein the non-stick paint is polytetrafluoroethylene paint, with a thickness of 200 um ± 5 um.

S4 outer bottom spraying operation: using cold gas spraying equipment to cold spray magnetic conductive powder onto the outer bottom of the pot billet 1 obtained in step S3 to obtain a magnetic conductive coating 102; and then using arc spraying equipment to arc spray metallic aluminum onto the magnetic conductive coating 102 to obtain an anti-rust coating 103; and the cold spraying operation specifically comprises the following steps: on cold gas spraying equipment, with 850°C inert compressed gas nitrogen as an accelerating medium, accelerating the metal particles of the magnetic conductive powder (magnetic conductive iron powder, with an average particle size of 25 um) to a critical speed to drive the metal particles to collide with the surface of the outer bottom of the pot billet 1 at a supersonic speed of 920 m/s in a solid state so that the particles undergo strong plastic deformation and deposition to form a magnetic conductive coating 102, wherein the thickness of the magnetic conductive coating 102 is controlled to 180 um ± 5 um. The arc spraying operation specifically comprises the following steps: melting aluminum wires by arc spraying equipment using arcs generated between two continuously fed aluminum wires (with a diameter f of 2 mm) as a heat source (at flame temperature of about 3000°C), atomizing the molten metallic aluminum wires with 0.7 MPa compressed air, accelerating the atomized metallic aluminum droplets, and spraying the droplets onto the outer bottom of the pot billet 1 at a speed of 160 m/s to form an anti-rust aluminum coating 103, wherein the thickness of the anti-rust coating 103 is controlled to 10 um ± 1 um.

Before the cold spraying operation in step S4, the surface of the outer bottom of the pot billet 1 is treated by ion beams (operating at a voltage of 2500 V), and the gas used in the ion beam treatment is a mixture of 15 sccm argon and 5 sccm sulfur dioxide to form a sulfur interface material layer (not shown) with a thickness of 2 atomic layers on the surface of the outer bottom of the pot billet 1. After the cold spraying operation in step S4, the surface of the magnetic conductive coating 102 is treated by ion beams (operating at a voltage of 2500 V), and the gas used in the ion beam treatment is a mixture of 20 sccm argon and 10 sccm sulfur dioxide to form a sulfur interface material layer (not shown) with a thickness of 8 atomic layers on the surface of the magnetic conductive coating 102 of the pot billet 1.

S5 external polishing operation: polishing the outer wall of the pot billet 1 obtained in step S4 on a polisher, so as to remove scratches and dents from the surface of the outer wall of the pot billet 1;

S6 external spraying operation: using external spraying equipment to apply a high-temperature resistant protective outer coating 104 onto the overall outer surface of the pot billet 1 obtained in step S5 to finally obtain the cold spray pot with a bottom oil accumulating function, which is called an oil accumulating pot for short. The protective outer coating 104 is prepared by referring to the prior art CN201910589481.7.

According to the above manufacturing method for a pot, three kinds of oil accumulating pot samples of different specifications in embodiments 1-3 are manufactured; and then the above oil accumulating pot samples and the traditional hot and cold double-bottom pans are compared and tested under the conditions of the same specifications and the same coating materials, and the testing results are shown in Table 1.

**Table 1 Testing and comparison data of oil accumulation pot and traditional double-bottom pots**

| Specification | Description of comparable product | Reading of digital power meter (Gear power of3500 W induction cooker) | Time required for heating water from room temperature to 100°C | | Cold bottom state | Change in hot state of bottom of pot heated to 250°C | Description of edible oil flow |
|---|---|---|---|---|---|---|---|
| 20 CM fry pan | (Embodiment 1) Oil accumulating pot, with a magnetic conductive diameter of 159 | 1200W | 500 g of water | 3'20" | Protruding outwards by H=1.0 | Protruding outwards by H=0.32 | When edible oil is poured into the product in a cold state, the oil accumulates in the middle position of the inner bottom of the pot and does not flow to the edge of the inner bottom of the pot when heated |
| | (Reference example 1) Traditional hot double-bottom pan, with a magnetic conductive diameter of 156 | 1475W | | 2'50" | Protruding inwards by 0.66 | Protruding inwards by 1.66 | When edible oil is poured into the product in a cold state, the oil flows to the periphery of the inner bottom of the pot and accelerates the flow to the periphery of the inner bottom of the pot when heated |
| | (Reference example 2) Traditional cold double-bottom pan, with a magnetic conductive diameter of 133 | 870W | | 5'35" | Protruding inwards by 0.68 | Protruding inwards by 0.97 | When edible oil is poured into the product in a cold state, the oil accumulates in the middle position of the inner bottom of the pot and does not flow to the edge of the inner bottom of the pot when heated |
| 24 CM fry pan | (Embodiment 2) Oil accumulating pot, with a magnetic conductive diameter of 190 | 1940W | 1000 g of water | 3'36" | Protruding outwards by H=1.2 | Protruding outwards by H=0.44 | When edible oil is poured into the product in a cold state, the oil accumulates in the middle position of the inner bottom of the pot and does not flow to the edge of the inner bottom of the pot when heated |
| | (Reference example 3) Traditional hot double-bottom pan, with a magnetic conductive diameter of 187 | 1995W | | 3'30" | Protruding inwards by 0.87 | Protruding inwards by 2.8 | When edible oil is poured into the product in a cold state, the oil accumulates in the middle position of the inner bottom of the pot and does not flow to the edge of the inner bottom of the pot when heated |
| | (Reference example 4) Traditional cold double-bottom pan, with a magnetic conductive diameter of 161 | 1473W | | 4'55" | Protruding inwards by 0.75 | Protruding inwards by 1.9 | When edible oil is poured into the product in a cold state, the oil accumulates in the middle position of the inner bottom of the pot and does not flow to the edge of the inner bottom of the pot when heated |
| 28 CM fry pan | (Embodiment 3) Oil accumulating pot, with a magnetic conductive diameter of 223 | 2395W | 1000 g of water | 2'55" | Protruding outwards by H=1.5 | Protruding outwards by H=0.6 | When edible oil is poured into the product in a cold state, the oil accumulates in the middle position of the inner bottom of the pot and does not flow to the edge of the inner bottom of the pot when heated |
| | (Reference example 5) Traditional hot double-bottom pan, with a magnetic conductive diameter of 220 | 2420W | | 2'40" | Protruding inwards by 0.9 | Protruding inwards by 4.2 | When edible oil is poured into the product in a cold state, the oil accumulates in the middle position of the inner bottom of the pot and does not flow to the edge of the inner bottom of the pot when heated |
| | (Reference example 6) Traditional cold double-bottom pan, with a magnetic conductive diameter of 188 | 2010W | | 3'30" | Protruding inwards by 0.96 | Protruding inwards by 2.68 | When edible oil is poured into the product in a cold state, the oil accumulates in the middle position of the inner bottom of the pot and does not flow to the edge of the inner bottom of the pot when heated |

Remarks: the above test process is repeated 10 times in the laboratory, thus obtaining approximate test data and results.

It can be seen that the patent of the present invention has considerable advantages over the technologies currently used. The above shows and describes the basic principles, main features and advantages of the present invention. Those skilled in the art shall understand that the present invention is not limited by the above embodiment. The above embodiment and description merely illustrate the principle of the present invention. Various changes and improvements can also be made to the present invention without departing from the spirit and scope of the present invention, and shall fall into the scope of the present invention.

## Claims

1. A manufacturing method for a cold spray pot with a bottom oil accumulating function, wherein the manufacturing method comprises the following steps:
S1 pot body forming operation: forming an aluminum alloy sheet into a shape of a pot billet by a large-tonnage press, wherein an annular lug boss is protruded outwards from the peripheral edge of the outer bottom of the pot billet, and a cambered surface protruded outwards is formed in the central area of the bottom of the pot billet;
S2 pretreatment operation: performing oil removal and internal sandblasting operation on the pot billet obtained in step S1 so that the inner surface roughness of the pot billet reaches Ra 2.8 to Ra 4.5;
S3 internal spraying operation: using internal spraying equipment to spray non-stick paint onto the inner surface of the pot billet obtained in step S2 to obtain a non-stick coating;
S4 outer bottom spraying operation: using cold gas spraying equipment to cold spray magnetic conductive powder onto the outer bottom of the pot billet obtained in step S3 to obtain a magnetic conductive coating; and then using arc spraying equipment to arc spray metallic aluminum onto the magnetic conductive coating to obtain an anti-rust coating;
S5 external polishing operation: polishing the outer wall of the pot billet obtained in step S4 on a polisher;
S6 external spraying operation: using external spraying equipment to apply a high-temperature resistant protective outer coating onto the overall outer surface of the pot billet obtained in step S5 to finally obtain the cold spray pot with a bottom oil accumulating function.

2. The manufacturing method for a cold spray pot with a bottom oil accumulating function according to claim 1, wherein the height difference H between the central point position of the outermost surface of the cambered surface and the peripheral edge position of the annular lug boss is 1.0-1.5 mm.

3. The manufacturing method for a cold spray pot with a bottom oil accumulating function according to claim 1, wherein the oil removal operation comprises the following steps: using sodium hydroxide solution to remove grease and oxides from the surface of the pot billet first, and then flushing with water; and conducting neutralization with dilute nitric acid at room temperature, finally flushing with water, and blow-drying to obtain a clean pot billet.

4. The manufacturing method for a cold spray pot with a bottom oil accumulating function according to claim 1, wherein the internal sandblasting operation comprises the following steps: using a sandblasting machine to spray 60-mesh or 80-mesh brown corundum sand uniformly onto the inner surface of the pot billet at an air pressure of 0.6-0.7 MPa, so as to achieve the roughness required for internal spraying.

5. The manufacturing method for a cold spray pot with a bottom oil accumulating function according to claim 1, wherein in step S4, the cold spraying operation specifically comprises the following steps: on cold gas spraying equipment, with 800-900°C inert compressed gas as an accelerating medium, accelerating the metal particles of the magnetic conductive powder to a critical speed to drive the metal particles to collide with the surface of the outer bottom of the pot billet at a supersonic speed of 800-1000 m/s in a solid state so that the particles undergo strong plastic deformation and deposition to form a magnetic conductive coating.

6. The manufacturing method for a cold spray pot with a bottom oil accumulating function according to claim 1, wherein in step S4, the arc spraying operation specifically comprises the following steps: melting aluminum wires by arc spraying equipment using arcs generated between two continuously fed aluminum wires as a heat source, atomizing the molten metallic aluminum wires with 0.6-0.7 MPa compressed air, accelerating the atomized metallic aluminum droplets, and spraying the droplets onto the outer bottom of the pot billet at a speed of 120-180 m/s to form an anti-rust aluminum coating.

7. The manufacturing method for a cold spray pot with a bottom oil accumulating function according to claim 1, wherein before the cold spraying operation in step S4, the surface of the outer bottom of the pot billet is treated by ion beams, and the gas used in the ion beam treatment is a mixture of 15 sccm argon and 5 sccm sulfur dioxide to form a sulfur interface material layer with a thickness of no more than 5 atomic layers on the surface of the magnetic conductive coating of the pot billet.

8. The manufacturing method for a cold spray pot with a bottom oil accumulating function according to claim 1, wherein after the cold spraying operation in step S4, the surface of the magnetic conductive coating is treated by ion beams, and the gas used in the ion beam treatment is a mixture of 20 sccm argon and 10 sccm sulfur dioxide to form a sulfur interface material layer with a thickness of 5-10 atomic layers on the surface of the outer bottom of the pot billet.

9. The manufacturing method for a cold spray pot with a bottom oil accumulating function according to claim 1, wherein in step S6, the protective outer coating can be formed from at least one of high-temperature paint, ceramic paint and non-stick paint.

10. A cold spray pot with a bottom oil accumulating function, wherein the pot is manufactured by the manufacturing method for a cold spray pot with a bottom oil accumulating function according to any one of claims 1-9.
